# EUROPEAN PATENT APPLICATION

(11) **EP 3 578 922 A1**
(43) Date of publication of application: **11.12.2019**
(21) Application number: 18175935.8
(22) Date of filing: 05.06.2018
(51) Int. Cl.: G01C 21/36, G06T 19/00

(54) **METHOD FOR REPRESENTING DATA IN A VEHICLE**

(71) Applicant: Visteon Global Technologies, Inc., Van Buren Township, MI 48111-5711 (US)
(72) Inventor: TORSCHMIED, Axel, 75334 Straubenhardt-Conweiler (DE); TUZAR, Gert-Dieter, 50170 Kerpen (DE); PFEIFLE, Martin, 50170 Kerpen (DE)
(74) Representative: MERH-IP Matias Erny Reichl Hoffmann Patentanwälte PartG mbB

(57) **Abstract**

A method for representing data in a vehicle. The method includes representing data from a map view (2) and data from a dynamic environment model (1) in linked form, whereby this representation occurs on a user interface, such as human-machine interface (HMI). The data from the dynamic environment model (1) is provided. The data from the map view (2) is combined with the data from the dynamic environment model (1). The data from the map view (2) and the data from the dynamic environment model (1) are represented in a collective view (12).

## Description

### 1. Field

Embodiments herein generally relate to a method for representing data in a vehicle, whereby data from a map view from a navigation system is made available and whereby this data is displayed to an occupant, such as a driver.

### 2. Related Art

A vehicle may include a navigation system for creating a route between a starting point and an ending destination. The navigation system may utilize a global positioning system (GPS) to determine position of the vehicle and other coordinates. The navigation may utilize GPS and data stored on-board the navigation system to generate the route. The data stored in the system usually comprises information on the course of roads, available traffic lanes, points of interest (POI), and speed limits. The navigation system includes a display for generating a representation, such as for the route or location of a POI on a map, for a driver. The representation is shown on the display in what is termed a map view. This display may show the representation in two-dimensional (2D) or three-dimensional (3D) form. Such three-dimensional representations are often available in densely populated and larger-sized towns/cities, and are also referred to as a 3D city model. Furthermore, the navigation system may allow for increasing or decreasing the size of the representation. This kind of 'zooming', i.e. setting of a zoom factor, can be performed within specified limits.

Additionally, the vehicle may include sensors, such as radar sensors, lidar sensors, cameras, ultrasound sensors, and others, to generate a dynamic model of a surrounding environment, also called dynamic environment model. For the surrounding environment, the dynamic model may contain information on a carriageway, traffic lanes, obstacles, speed limits, and other road users, such as vehicles and/or pedestrians, that are around the vehicle. This data from the dynamic model, on the surround environment, may be displayed in the vehicle. However, this is done in a disjointed and independent fashion from the navigation system. For example, data from a first sensor may be displayed at a first location and have a first representative form, while data from a second sensor may be displayed at a different location and have a different representative form.

A need exists for linking data from a map view of a navigation system with data from a dynamic environment model. Similarly, there is a need for representing data from a map view that is linked from data from a dynamic environment model.

### SUMMARY

One or more embodiments herein describe a method for linking data from a map view with data from a dynamic environment model. Furthermore, one or more embodiments herein describe a method for providing a representation of such linked data on a user interface, such as a human machine interface (HMI). As such, one or more methods provide for representing data in a vehicle by means of which it becomes possible to represent, in linked form, data from a map view and data from a dynamic environment model, whereby this representation occurs on a user interface (HMI) of a display in the vehicle.

Provision is made to combine - for example - data from a map view from a navigation system with the data from the dynamic environment model or to use these to supplement each other, and hence to provide a collective view of this data which contains data from both sources. This collective view, which for example shows the course of roads in the area immediately surrounding the motor vehicle, also contains a proposed route to a destination and, for example, information on sections with slow-moving traffic or an accident scene.

Here the proposed route is provided by the navigation system and is a component of the data from the map view. The information concerning sections with slow-moving traffic has been provided through communication with the environment of the vehicle (V2X) and the information on the accident scene through vehicle-to-vehicle communication (V2V) from a vehicle ahead, and is a component of the data from the dynamic environment model.

Alongside the representation of all this information - which is by way of an example - in a collective view on a human machine interface (HMI) of a vehicle such as a display or a head-up display, provision is made to display the collective view in different scales with different zoom factors.

Thus the zoom factor of the collective view can be selected by the driver him- or herself within specified limits. Hence details in the collective view can be better discerned. For example, the lane blocked by the accident can be recognised in the enlarged representation or zoom view, or a possibility for leaving the current road before the accident scene discerned. Similarly there can be the possibility of identifying the crashed vehicle as a motorcycle, car or lorry if the vehicle ahead, which has transmitted the data on the accident by means of V2V communication, has made this data available. Alternatively it is also possible to be more aware of road conditions such as icy roads if this information has been provided in appropriate details via V2X communication.

Provision is made to generate the data for the dynamic environment model using sensors arranged on the vehicle. To this end, particularly camera sensors, radar sensors, lidar sensors, ultrasound sensors or GPS sensors of the vehicle are used. But the method is not restricted to these sensors.

It is also provided that, by means of these sensors, information regarding the carriageway or lanes of this carriageway, obstacles, speed limits, are made available to other road users. Here, other road users may be for example vehicles (bicycle, motorcycle, car, lorry) and/or pedestrians.

Provision is also made to use data for the dynamic environment model which is recorded by sensors of other vehicles. This information is for example received by the driver's own vehicle by means of V2V communication. Thus the quality of the dynamic environment model can be improved. This concerns both the accuracy and the quantity of information in the dynamic environment model.

In the event that data is received for the dynamic environment model by means of communication of the vehicle with the surrounding area (V2X), for example with intelligent road signs, this data is, in particular, information concerning a current flow of traffic, road conditions and traffic disruptions.

Provision is made, in the collective view of this data from the map view and the dynamic environment model, to represent objects which have been detected by means of several sensors (merging). Likewise, objects detected by and possibly also classified by a camera are displayed. In addition, the houses, road signs, traffic control devices, objects at the side of the road and along the road are displayed, whereby these objects can be represented in the form of a point cloud. Furthermore, all data received by means of V2X or V2V communication is represented in the collective view.

Provision is made, through the use of the data from the dynamic environment model, to improve the collective view in particular in a high detail level or a large zoom factor. Thus errors or inaccuracies in the map view can be eliminated through the dynamic environment model and dynamic objects be allocated at the map level. Thus for example a zoom beyond a resolution provided by the map view is possible, since a transition from the map view to a current view of several lanes in front of the vehicle generated by a front camera can be generated and the information from the map and sensors merged. Thus for example the lanes recorded in the maps can be supplemented with the traffic lanes detected by the sensors. Here a representation of a route or a recommendation to turn off, for example, is retained in the representation or can, for example, be adapted to the more detailed representation by the planned route being displayed precisely above the lane to be used.

Provision is also made to execute a two-dimensional and/or three-dimensional representation of different objects in the collective view.

It is advantageous that an improvement in the navigation for the driver of the vehicle is achieved by the fact that dynamic objects on the travel route are detected and can be taken into consideration in the navigation.

An alignment can be performed between data from a map view and dynamically generated sensor data from a camera. Hence it is possible, for example, for a changed number of traffic lanes or a changed speed limit to be detected and taken into consideration in the navigation.

Further details, features and advantages of the embodiments are apparent from the following description of embodiments with reference to the associated drawings.

### BRIEF DESCRIPTION OF THE DRAWINGS

- Fig. 1:: a schematic diagram of the data combined in the method for representing data in a vehicle in a collective view with its sources and
- Fig. 2:: a schematic diagram of the combined data in a collective view in different scales.

### DETAILED DESCRIPTION

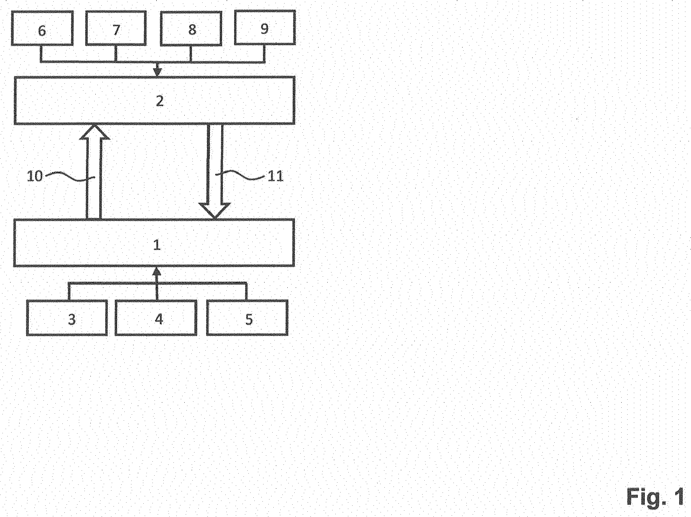

Figure 1 shows a schematic diagram of the data combined in the method for representing data in a vehicle in a collective view 12 with its sources.

A dynamic environment model 1, generated for example in a sensor data processing unit, receives input data from a first sensor 3 and a second sensor 4, whereby the number of sensors used is not limited. In the example the first sensor 3 could be a video camera and the second sensor 4 a radar unit. In addition, the dynamic environment model 1 may receive further data via a communication interface 5. Such a communication interface 5 may be designed for communication of the vehicle with its surrounding area (V2X) or for vehicle-to-vehicle communication (V2V), or for both. Thus data is provided which is processed in the dynamic environment model 1.

Figure 1 also shows data from a map view 2, which is stored for example as data in a navigation system of a vehicle. Such data usually comprises map data 6 with information on the course of roads, available traffic lanes, objects in the surrounding area and information on speed limits. In addition, in most cases information on 'points of interest' (POI) 7, which could be important to the user of a navigation system, is stored. Examples of such POIs that can be named are pubs and restaurants, accommodation, filling stations, ATMs, car parks, garages, pharmacies, tourist attractions, cinemas, sports stadia, museums and others.

The map view 2 may also comprise information concerning a 3D city model 8; it is possible, here, to limit this to larger towns. In addition, the map view 2 may comprise traffic information such as maximum permitted speeds.

The map view 2 may also contain traffic information 9.

In accordance with the method for representing data in a vehicle, the data from the map view 2 is combined with the data from the dynamic environment model 1 and represented on an interface (not shown in Figure 1).

For this data merging 14 of the data, a first communication path or an environment model output 10 is provided between the dynamic environment model 1 and the data from map view 2, and a second communication path or map merging input 11 provided between the data from the map view 2 and the dynamic environment model 1.

Here it is possible, via the environment model output 10, for the data from a map view 2 to be linked or combined with information about detected and/or classified objects, with information concerning their allocation to certain groups and/or with a representation of these objects, for example in the form of a point cloud.

In addition, the dynamic environment model 1 can, via the map merging input 11, be linked or combined with basic map data, information concerning traffic lanes and others.

As a result of this data merging 14, a collective view 12 is provided for representation, for example on a display in the vehicle. The map data could also consist only of electronic horizon information, for instance, as provided by the ADASIS standard (Advanced Driver Assistance Systems Interface Specifications).

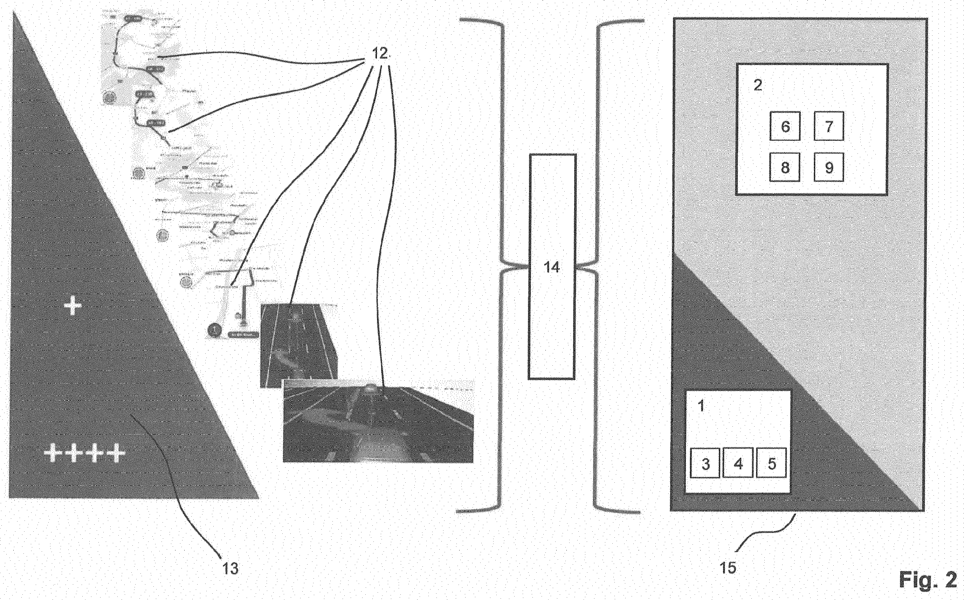

Figure 2 shows a schematic diagram for the generation of the combined data in a collective view 12 in different scales or zoom factor 13. On the left-hand edge of Figure 2, the zoom factor 13 is shown, with the zoom increasing from top to bottom. This means the collective view 12 shown right at the top allows an extensive view over the area around the vehicle, whilst the lowest collective view 12 reproduces the area of the traffic lanes directly in front of the vehicle in a high level of detail.

Irrespective of the zoom factor 13 of the collective view 12 selected at any particular time, a route to a destination calculated by the navigation system is displayed in all representations to the driver.

In addition it is possible, for example in a collective view 12 with a high zoom factor 13, i.e. a high level of detail, to display information about a potential danger or a recommendation to change lanes to avoid the potential danger.

Whilst the data for the routing has been obtained from the data from the map view 2, the data for a reference to a potential danger has been taken from the dynamic environment model 1.

For the generation of the collective view 12, data merging 14 takes place, during which for example objects and events are arranged in the correct position or superimposed. In addition, depending on the zoom factor 13, a priority of the information to be represented in the collective view 12 can be specified. For example, an item of information contained in the dynamic environment model 1 regarding a potential hazard can for example only be displayed to the driver from a certain zoom factor 13 upwards. A further criterion can be the distance between the vehicle and the potential hazard. Thus this potential hazard is not shown until the vehicle has reached or is at less than a stipulated distance from it.

The data available to the method from the dynamic environment model 1 is a component of the data source 15. For example the data from a map view 2 comprises map data 6, information concerning points of interest 7 (POI), information concerning one or more 3D city models 8, and traffic information 9.

Data from the data source 15 also includes data from the dynamic environment model 1. This data is generated for example by a first sensor 3 and a second sensor 4. In addition, the data from the dynamic environment model 1 contains information which has been transferred to the vehicle. This may for example be a communication of the vehicle with the surrounding area (V2X) or a communication between vehicles (V2V).

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention. Furthermore, the embodiments of the present invention generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation desired. It is recognized that any circuit or other electrical device disclosed herein may include any number of microcontrollers, processors, integrated circuits, memory devices (e.g., FLASH, random access memory (RAM), read only memory (ROM), electrically programmable read only memory (EPROM), electrically erasable programmable read only memory (EEPROM), or other suitable variants thereof) and software which co-act with one another to perform any operation(s) disclosed herein. In addition, any one or more of the electrical devices may be configured to execute a computer-program that is embodied in a non-transitory computer readable medium that is programmed to perform any number of the functions as disclosed. While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

### List of reference symbols

- 1: Dynamic environment model
- 2: Data from a map view
- 3: First sensor
- 4: Second sensor
- 5: V2X and/or V2V communication interface (Car2X/C2C)
- 6: Map data
- 7: Point of interest (POI)
- 8: 3D city model
- 9: Traffic information
- 10: Environment model output (first communication path)
- 11: Map merging input (second communication path)
- 12: Collective view
- 13: Zoom factor
- 14: Data merging
- 15: Data source

## Claims

1. Method for representing data in a vehicle, whereby data from a map view (2) from a navigation system is provided and whereby this data is displayed to a driver, wherein data from a dynamic environment model (1) is provided, that the data from the map view (2) is combined with the data from the dynamic environment model (1) and that the data from the map view (2) and the data from the dynamic environment model (1) are represented in a collective view (12).

2. Method in accordance with Claim 1, wherein the data for the dynamic environment model (1) is generated by means of radar, lidar, ultrasound or GPS sensors (3, 4) on the vehicle.

3. Method in accordance with Claim 1 or 2, wherein the data for the map view (2) is generated by an electronic horizon provider providing relevant map data along a most probable path of the vehicle, whereby the most probable path can be the computed route path of the vehicle.

4. Method in accordance with one of Claims 1 to 3, wherein the data for the map view (2) is generated by a map rendering unit of a navigation system providing relevant map data around the vehicle.

5. Method in accordance with one of Claims 1 to 4, wherein the data for the dynamic environment model (1) contains information concerning a carriageway or concerning traffic lanes, obstacles, speed limits, other road users such as vehicles and/or pedestrians.

6. Method in accordance with one of Claims 1 to 5, wherein the data for the dynamic environment model (1) is generated by means of radar, lidar, ultrasound or GPS sensors (3, 4) belonging to a second vehicle and is transmitted to the vehicle using a communication interface (5) (V2V) between vehicles.

7. Method in accordance with one of Claims 1 to 6, wherein the data for the dynamic environment model (1) is transferred to the vehicle using a communication interface (5) (V2X) in the area surrounding the vehicle, whereby the data contains information concerning a current traffic flow, road conditions and traffic disruptions.

8. Method in accordance with one of Claims 1 to 7, wherein the collective view (12) of the data from the map view (2) and the data from the dynamic environment model (1) is represented in different, selectable degrees of detail in a view that can be enlarged or shrunk with a different zoom factor (13).

9. Method in accordance with one of Claims 1 to 8, wherein the representation of the collective view (12) occurs by means of a human machine interface (HMI) provided in the vehicle, such as a display or a head-up display.
